# EUROPÄISCHE PATENTANMELDUNG

(11) **EP 4 656 105 A1**
(43) Veröffentlichungstag der Anmeldung: **03.12.2025**
(21) Anmeldenummer: 24200700.3
(22) Anmeldetag: 17.09.2024
(51) Int. Cl.: A47J 31/52, A47J 31/36

(54) **VERFAHREN ZUM BETREIBEN EINES ALS SIEBTRÄGERMASCHINE AUSGEBILDETEN GETRÄNKEBEREITERS SOWIE ALS SIEBTRÄGERMASCHINE AUSGEBILDETER GETRÄNKEBEREITER**

(30) Priorität: 28.05.2024 DE 102024114916
(71) Anmelder: Wilhelm Gronbach GmbH & Co. KG, 6342 Niederndorf (AT)
(72) Erfinder: Mathes, Anton, 83364 Neukirchen am Teisenberg (DE); Donauer, Rupert, 83254 Breitbrunn am Chiemsee (DE); Bocks, Stefan, 83112 Frasdorf (DE)
(74) Vertreter: Hofstetter, Schurack & Partner

(57) **Zusammenfassung**

Die Erfindung betrifft ein Verfahren zum Betreiben eines als Siebträgermaschine ausgebildeten Getränkebereiters (10) zum Zubereiten von Kaffeegetränken, bei welchem mittels einer Pumpe (18) des Getränkebereiters (10) Wasser gefördert wird, wodurch das Wasser durch einen Siebträger (14), in welchem Kaffeepulver aufgenommen ist, hindurchströmt, um aus dem Wasser und dem Kaffeepulver ein Kaffeegetränk zuzubereiten. Mittels einer Wiedergabeeinrichtung (29) des Getränkebereiters (10) wird an eine Umgebung (32) des Getränkebereiters (10) wenigstens ein von einer sich in der Umgebung (32) des Getränkebereiters (10) aufhaltenden Person optisch und/oder akustisch wahrnehmbares Signal ausgegeben, welches wenigstens eine Information über einen Mahlgrad des Kaffeepulvers und/oder über eine Veränderung des Mahlgrads des Kaffeepulvers umfasst.

## Beschreibung

Die vorliegende Erfindung betrifft ein Verfahren zum Betreiben eines als Siebträgermaschine ausgebildeten Getränkebereiters. Des Weiteren betrifft die Erfindung einen Getränkebereiter, welcher als eine Siebträgermaschine ausgebildet ist.

Als Siebträgermaschinen ausgebildete Getränkebereiter zum Zubereiten von Kaffeegetränken wie beispielsweise Espressi sind aus dem allgemeinen Stand der Technik bereits hinlänglich bekannt. Mittels des jeweiligen Getränkebereiters können jeweilige, als Kaffeegetränke ausgebildete Heißgetränke zubereitet werden. Hierfür wird Wasser verwendet, aus welchem das jeweilige Kaffeegetränk zubereitet wird.

Aufgabe der vorliegenden Erfindung ist es, ein Verfahren zum Betreiben eines als Siebträgermaschine ausgebildeten Getränkebereiters sowie einen als Siebträgermaschine ausgebildeten Getränkebereiter zu schaffen, sodass mittels des Getränkebereiters Kaffeegetränke besonders vorteilhaft zubereitet werden können.

Diese Aufgabe wird erfindungsgemäß durch ein Verfahren mit den Merkmalen des Patentanspruchs 1 sowie durch einen Getränkebereiter mit den Merkmalen des Patentanspruchs 8 gelöst. Vorteilhafte Ausgestaltungen mit zweckmäßigen Weiterbildungen der Erfindung sind in den übrigen Ansprüchen angegeben.

Ein erster Aspekt der Erfindung betrifft ein Verfahren zum Betreiben eines als Siebträgermaschine ausgebildeten Getränkebereiters zum Zubereiten von, insbesondere als Heißgetränke ausgebildeten, Kaffeegetränken. Im Folgenden wird das jeweilige Kaffeegetränk auch als Getränk bezeichnet. Insbesondere sind unter den Kaffeegetränken Kaffeespezialitäten zu verstehen. Insbesondere ist der Getränkebereiter dazu ausgebildet, als das jeweilige Kaffeegetränk Espresso zuzubereiten.

Bei dem Verfahren wird mittels einer Pumpe des Getränkebereiters Wasser gefördert, wodurch das Wasser durch einen Siebträger des Getränkebereiters, in dessen Siebträger einfach auch als Pulver bezeichnetes Kaffeepulver aufgenommen ist, hindurchströmt, um aus dem Wasser und dem Kaffeepulver ein Kaffeegetränk zuzubereiten. Somit wird dadurch, dass mittels der Pumpe das Wasser gefördert wird, das Wasser mittels der Pumpe durch den Siebträger hindurchgefördert, wodurch das Wasser durch den Siebträger hindurchströmt. Da in dem Siebträger das Kaffeepulver aufgenommen ist, während das Wasser durch den Siebträger hindurchströmt, strömt das Wasser durch das Kaffeepulver hindurch. Beispielsweise tritt das Wasser, nachdem es durch das Kaffeepulver und den Siebträger hindurchgeströmt ist, aus dem Siebträger aus und wird beispielsweise in einer unter dem Siebträger angeordneten Tasse aufgefangen, in welcher sich das Kaffeegetränk sammelt. Vorzugsweise wird als die Pumpe eine elektrische Pumpe, mithin eine elektrisch betreibbare Pumpe verwendet, sodass die Pumpe vorzugsweise elektrisch betrieben wird, um mittels der Pumpe das Wasser zu fördern. Insbesondere ist es vorgesehen, dass der Getränkebereiter eine insbesondere elektrisch betreibbare Heizeinrichtung aufweist, mittels welcher das Wasser, welches mittels der Pumpe gefördert wird, insbesondere elektrisch, aufgeheizt wird. Hierfür wird beispielsweise die Heizeinrichtung mit elektrischer Energie versorgt, um die Heizeinrichtung elektrisch zu betreiben und in der Folge das Wasser, welches mittels der Pumpe gefördert wird, unter Nutzung der elektrischen Energie und somit elektrisch aufzuheizen. Somit strömt beispielsweise das mittels der Heizeinrichtung aufgeheizte, mithin erwärmte Wasser durch den Siebträger hindurch, sodass beispielsweise das Kaffeegetränk als ein Heißgetränk zubereitet wird.

Bei dem Verfahren wird mittels einer insbesondere elektrischen oder elektronischen Wiedergabeeinrichtung des Getränkebereiters an eine Umgebung des Getränkebereiters insgesamt wenigstens ein Signal ausgegeben, welches von einer sich in der Umgebung des Getränkebereiters aufhaltenden Person optisch und/oder akustisch wahrnehmbar ist, sodass das Signal mittels des menschlichen Auges und somit optisch und/oder mittels des menschlichen Ohres und somit akustisch wahrnehmbar ist. Hierfür weist beispielsweise die Wiedergabeeinrichtung eine auch als Bildschirm bezeichnete, elektrisch angesteuerte Anzeige auf, auf welcher insbesondere durch elektrisches Ansteuern der Anzeige das Signal angezeigt und hierdurch an die Umgebung ausgegeben wird, wodurch das Signal von der sich in der Umgebung aufhaltenden Person optisch wahrnehmbar ist. Alternativ oder zusätzlich weist beispielsweise die Wiedergabeeinrichtung einen auch als Lautsprecher bezeichneten Schallwandler auf, mittels welchem insbesondere unter elektrischem Ansteuern des Lautsprechers das Signal an die Umgebung ausgegeben wird, wodurch das Signal von der sich in der Umgebung aufhaltenden Person akustisch wahrnehmbar ist. Das Signal umfasst wenigstens eine Information über einen Mahlgrad des Kaffeepulvers. Alternativ oder zusätzlich umfasst das Signal wenigstens eine Information über eine Veränderung des Mahlgrads des Kaffeepulvers. Somit wird mittels des Signals die Information über den Mahlgrad des Kaffeepulvers und/oder die Information über die Veränderung des Mahlgrads des Kaffeepulvers, insbesondere an die Umgebung und somit insbesondere an die sich in der Umgebung aufhaltende Person, kommuniziert. Mit anderen Worten wird somit die sich in der Umgebung aufhaltende Person mittels des Signals über den Mahlgrad informiert. Alternativ oder zusätzlich wird beispielsweise die sich in der Umgebung aufhaltende Person durch das Signal zu einer Veränderung des Mahlgrads angeregt. Der Mahlgrad ist oder charakterisiert eine Art und Weise, auf die das Kaffeepulver hergestellt wurde, insbesondere dadurch, dass Kaffeebohnen mittels einer Mühle zu dem Kaffeepulver gemahlen wurden. Insbesondere ist oder charakterisiert der Mahlgrad eine auch als Teilchengröße bezeichnete Größe von das einfach auch als Pulver bezeichnete Kaffeepulver bildenden, auch als Pulverteilchen bezeichneten Teilchen. Wieder mit anderen Worten ist oder charakterisiert der Mahlgrad ein Maß, wie stark, das heißt wie fein die Kaffeebohnen zu dem Kaffeepulver gemahlen wurden. Je) stärker der Mahlgrad, das heißt beispielsweise je höher oder größer ein den Mahlgrad charakterisierender Wert ist, desto feiner, das heißt desto stärker wurden die Kaffeebohnen gemahlen, das heißt desto kleiner sind die Teilchen beziehungsweise deren Teilchengröße.

Die Information kann beispielsweise wahlweise umfassen, dass der Mahlgrad zu grob oder zu fein ist, sodass die Information und somit das Signal wahlweise angeben, dass der Mahlgrad zu grob oder zu fein ist. Ferner ist es denkbar, dass die Information und somit das Signal wahlweise angeben, dass der Mahlgrad zu grob oder zu fein oder korrekt ist. Somit wird der sich in der Umgebung aufhaltenden Person dadurch, dass das Signal an die Umgebung ausgegeben wird, wahlweise kommuniziert, dass der Mahlgrad zu grob oder zu fein ist. Insbesondere wird beispielsweise der sich in der Umgebung aufhaltenden Person dadurch, dass das Signal an die Umgebung ausgegeben wird, kommuniziert, dass der Mahlgrad zu grob oder zu fein oder korrekt ist. Ferner ist es denkbar, dass die Information wahlweise umfasst und somit kommuniziert, dass der Mahlgrad vergröbert oder verfeinert werden sollte. Insbesondere kann beispielsweise die Information wahlweise umfassen, dass der Mahlgrad verfeinert, vergröbert oder unverändert belassen werden soll. Gibt die Information beziehungsweise das Signal beispielsweise an, dass der Mahlgrad zu grob ist, so wird die sich in der Umgebung aufhaltende Person hierdurch dazu angeregt, den Mahlgrad zu verfeinern und somit zu verändern. Gibt beispielsweise die Information beziehungsweise das Signal an, dass der Mahlgrad zu fein ist, so wird hierdurch die sich in der Umgebung aufhaltende Person dazu angeregt, den Mahlgrad zu vergröbern und somit zu verändern. Die Person ändert den Mahlgrad durch Beeinflussen beziehungsweise Einstellen der genannten Mühle. Verändert die Person den Mahlgrad derart, dass der Mahlgrad verfeinert wird, und werden dann mittels der Mühle Kaffeebohnen gemahlen, sodass ein weiteres Kaffeepulver hergestellt wird, dessen weitere Pulverteilchen feiner, das heißt kleiner sind als die Pulverteilchen des Kaffeepulvers, die in dem Siebträger angeordnet waren, durch das das Wasser hindurchgefördert wurde. Verändert die Person durch Beeinflussen beziehungsweise Einstellen der Mühle derart, dass der Mahlgrad vergröbert wird und werden dann mittels der Mühle Kaffeebohnen insbesondere zu einem dritten Kaffeepulver gemahlen, so sind dessen dritte Pulverteilchen gröber, das heißt größer als die Pulverteilchen des Kaffeepulvers, das in dem Siebträger angeordnet war, durch das das Wasser hindurchgefördert wurde. Ein Hintergrund der Erfindung ist insbesondere, dass der Mahlgrad und somit die Größe der Pulverteilchen einen sehr großen Einfluss, wenn nicht den größten Einfluss auf einen von einer das zubereitete Kaffeegetränk trinkenden Person wahrnehmbaren Geschmack des Kaffeegetränks haben. Ist der Mahlgrad zu grob, das heißt sind die Pulverteilchen des in dem Siebträger aufgenommenen Kaffeepulvers zu groß, so strömt das geförderte Wasser zu schnell durch den Siebträger und das Kaffeepulver hindurch, sodass beispielsweise das zubereitete Kaffeegetränk einen nicht hinreichend intensiven, zu laschen Geschmack aufweist. Ist der Mahlgrad jedoch zu fein, sodass die Pulverteilchen des in dem Siebträger aufgenommenen Kaffeepulvers zu fein, das heißt zu klein sind, so strömt das mittels der Pumpe geförderte Wasser zu langsam durch den Siebträger und das Kaffeepulver hindurch, sodass das zubereitete Kaffeegetränk einen zu intensiven und/oder zu bitteren Geschmack aufweisen kann. Das Auffinden und Einstellen des korrekten Mahlgrads, der zu einem guten Geschmack des zubereiteten Kaffeegetränks führt, ist in der Regel ein mühevoller und zeitaufwendiger, iterativer Prozess, in dessen Rahmen üblicherweise ohne Unterstützung durch eine Siebträgermaschine, mittels welcher das Kaffeegetränk zubereitet wird, sukzessive Zubereitungsvorgänge durchgeführt werden müssen. Bei dem jeweiligen Zubereitungsvorgang wird aus Kaffeebohnen ein jeweiliges Kaffeepulver hergestellt, aus welchem dann mittels der Siebträgermaschine ein jeweiliges Kaffeegetränk zubereitet wird. Die in den Zubereitungsvorgängen hergestellten Kaffeepulver unterscheiden sich dabei hinsichtlich ihres jeweiligen Mahlgrads voneinander. Wurde für Kaffeebohnen, das heißt eine bestimmte Sorte von Kaffeebohnen einmal ein korrekter Mahlgrad ermittelt, so kann dieser unter Umständen nicht immer für die gleiche Sorte an Kaffeebohnen beibehalten werden, da beispielsweise der Feuchtegehalt in den Kaffeebohnen variieren kann, wobei für unterschiedliche Feuchtegehalte unterschiedliche Mahlgrade vorteilhaft beziehungsweise korrekt sein können.

Erkennbar ist, dass die genannte Veränderung des Mahlgrads des Kaffeepulvers eine beispielsweise von der Person oder von einer anderen Person insbesondere manuell und ganz insbesondere an der Mühle vorzunehmende Veränderung des Mahlgrads) ist.

Das erfindungsgemäße Verfahren ermöglicht es nun, die sich in der Umgebung aufhaltende und beispielsweise das Kaffeegetränk zubereitende Person beim Auffinden des korrekten Mahlgrads zu unterstützen, sodass die Person den korrekten Mahlgrad, welcher zu einem vorteilhaften Geschmack des Kaffeegetränks führt, zeitgünstig und komfortabel finden kann.

Um den korrekten Mahlgrad besonders komfortabel und zeitgünstig finden zu können, ist es bei einer ersten Ausprägung des erfindungsgemäßen Verfahrens vorgesehen, dass, insbesondere während das Wasser mittels der Pumpe gefördert wird, mittels eines auch als Flowmeter bezeichneten Durchflusssensors des Getränkebereiters ein Durchfluss des mittels der Pumpe geförderten, insbesondere des mittels der Pumpe durch den Siebträger hindurchgeförderten, Wassers gemessen wird. Der Durchfluss ist oder umfasst beispielsweise einen Volumenstrom des mittels der Pumpe geförderten Wassers und/oder einen Massenstrom des mittels der Pumpe geförderten Wassers. Bei der ersten Ausprägung des erfindungsgemäßen Verfahrens wird das Signal in Abhängigkeit von dem mittels des Durchflusssensors gemessenen Durchflusses ausgegeben.

Bei einer alternativ oder zusätzlich zu der ersten Ausprägung vorgesehenen zweiten Ausprägung des erfindungsgemäßen Verfahrens ist es vorgesehen, dass, insbesondere während das Wasser mittels der Pumpe gefördert wird, mittels eines Drucksensors des Getränkebereiters ein Druck des mittels der Pumpe geförderten, insbesondere durch den Siebträger hindurchgeförderten, Wassers gemessen wird, wobei das Signal in Abhängigkeit von dem mittels des Drucksensors gemessenen Druck ausgegeben wird.

Bei einer alternativ oder zusätzlich zu der ersten Ausprägung und/oder alternativ oder zusätzlich zu der zweiten Ausprägung vorgesehenen dritten Ausprägung des erfindungsgemäßen Verfahrens ist es vorgesehen, dass mittels der Pumpe eine vorgegebene Menge des Wassers, insbesondere durch den Siebträger hindurch, gefördert wird, wobei mittels eines Zeitmessgeräts des Getränkebereiters eine für das mittels der Pumpe bewirkte Fördern der vorgegebenen Menge erforderliche Zeitspanne als eine Ist-Zeitspanne gemessen wird. Mittels einer elektronischen Recheneinrichtung des Getränkebereiters wird die gemessene Ist-Zeitspanne mit einer insbesondere vorgegebenen oder vorgebbaren und beispielsweise in einem elektrischen oder elektronischen Speicher der elektronischen Recheneinrichtung gespeicherten Soll-Zeitspanne verglichen, wobei das Signal in Abhängigkeit von dem Vergleich der Ist-Zeitspanne mit der Soll-Zeitspanne ausgegeben wird. Mit anderen Worten wird mittels der elektronischen Recheneinrichtung ein Vergleich durchgeführt, bei dem die Ist-Zeitspanne mit der Soll-Zeitspanne verglichen wird. Dabei wird das Signal in Abhängigkeit von dem Vergleich ausgegeben. Ergibt beispielsweise der Vergleich, dass die Ist-Zeitspanne kürzer als die Soll-Zeitspanne ist, so kann darauf rückgeschlossen werden, dass das Wasser zu schnell durch den Siebträger und das darin aufgenommene Kaffeepulver hindurchströmt, sodass in der Folge darauf rückgeschlossen werden kann, dass der Mahlgrad zu grob ist. In der Folge kann die Person durch Ausgeben des Signals dazu angeregt werden, den Mahlgrad zu verfeinern. Ergibt beispielsweise der Vergleich der Ist-Zeitspanne mit der Soll-Zeitspanne, dass die Ist-Zeitspanne länger, das heißt größer als die Soll-Zeitspanne ist, so kann darauf rückgeschlossen werden, dass das Wasser zu langsam durch den Siebträger und das darin aufgenommene Kaffeepulver hindurchströmt. In der Folge kann darauf rückgeschlossen werden, dass der Mahlgrad zu fein ist. In der Folge kann beispielsweise durch Ausgeben des Signals die Person dazu angeregt werden, den Mahlgrad zu vergröbern. In der Folge kann die Person beispielsweise den korrekten, zu einem vorteilhaften Geschmack des Kaffeegetränks führenden Mahlgrad komfortabel und zeitgünstig auffinden beziehungsweise an der Mühle einstellen.

Bei dem Verfahren wird beispielsweise mittels der Pumpe das Wasser derart gefördert, dass mittels der Pumpe eine Gesamtmenge des Wassers gefördert wird. Insbesondere wird beispielsweise durch das Fördern des Wassers mittels der Pumpe die Gesamtmenge aus einem Tank des Getränkebereiters herausgefördert, wobei in dem Tank das Wasser aufgenommen ist. Dabei ist es denkbar, dass ein erster Teil der mittels der Pumpe geförderten Gesamtmenge zurück in den Tank und somit nicht durch den Siebträger hindurchströmt, sodass, insbesondere nur, ein zweiter Teil der mittels der Pumpe geförderten Gesamtmenge des Wassers durch den Siebträger und somit das in dem Siebträger aufgenommene Kaffeepulver hindurchströmt. Beispielsweise ergeben der erste Teil und der zweite Teil in Summe die Gesamtmenge. Dabei ist es insbesondere denkbar, dass der mittels des Durchflusssensors gemessene Durchfluss ein Durchfluss des zweiten Teils ist. Ferner ist es denkbar, dass der mittels des Drucksensors gemessene Druck ein Druck des zweiten Teils ist. Ferner ist es denkbar, dass die vorgegebene Menge eine vorgegebene Menge des zweiten Teils ist. Hierdurch können besonders vorteilhafte, insbesondere präzise, Rückschlüsse auf den insbesondere aktuellen Mahlgrad des, insbesondere aktuell, das heißt während des Verfahrens, in dem Siebträger aufgenommenen Kaffeepulvers gezogen werden, sodass durch Ausgeben des Signals an die Umgebung die Person besonders gut beim Auffinden beziehungsweise Einstellen des korrekten Mahlgrads unterstützt werden kann.

Beispielsweise wird mittels der Pumpe das Wasser, insbesondere durchgängig und somit unterbrechungsfrei, während und/oder innerhalb eines Gesamtzeitintervalls gefördert, insbesondere durch den Siebträger hindurchgefördert. Mit anderen Worten weist das Verfahren beispielsweise das Gesamtzeitintervall auf, während und/oder innerhalb welchem mittels der Pumpe das Wasser gefördert wird, insbesondere durch den Siebträger hindurchgefördert wird. Das Gesamtzeitintervall erstreckt sich von einem ersten Zeitpunkt bis zu einem zweiten Zeitpunkt, insbesondere durchgängig, sodass das Gesamtzeitintervall zu dem ersten Zeitpunkt beginnt und zu dem zweiten Zeitpunkt endet. Dabei ist es vorzugsweise vorgesehen, dass die, insbesondere gesamte, Zeitspanne kürzer als das Gesamtzeitintervall ist, wobei beispielsweise die Pumpe das Wasser während und/oder innerhalb der, insbesondere gesamten, Zeitspanne, insbesondere unterbrechungsfrei und somit durchgängig, fördert. Die Zeitspanne beginnt beispielsweise zu einem dritten Zeitpunkt und endet zu einem vierten Zeitpunkt, sodass sich die Zeitspanne von dem dritten Zeitpunkt zu dem vierten Zeitpunkt erstreckt, insbesondere durchgängig und somit unterbrechungsfrei. Dabei ist insbesondere denkbar, dass die, insbesondere gesamte, Zeitspanne, in dem Gesamtzeitintervall liegt. Denkbar ist, dass der dritte Zeitpunkt mit dem ersten Zeitpunkt zusammenfällt oder der dritte Zeitpunkt liegt zwischen dem ersten Zeitpunkt und dem zweiten Zeitpunkt. Denkbar ist, dass der vierte Zeitpunkt mit dem zweiten Zeitpunkt zusammenfällt, oder der vierte Zeitpunkt liegt zwischen dem ersten Zeitpunkt und dem zweiten Zeitpunkt. Insbesondere liegt der dritte Zeitpunkt zwischen dem ersten Zeitpunkt und dem vierten Zeitpunkt. Ferner liegt beispielsweise der vierte Zeitpunkt zwischen dem dritten Zeitpunkt und dem zweiten Zeitpunkt. Insbesondere ist das Gesamtzeitintervall größer als null. Vorzugsweise ist die Zeitspanne größer als Null. Ganz vorzugsweise ist die Zeitspanne ein Intervallteil des Gesamtzeitintervalls, wobei in dem Intervallteil der Druck wenigstens eine vorgegebene Druckeigenschaft und/oder der Durchfluss wenigstens oder genau eine vorgegebene Durchflusseigenschaft aufweist, sodass beispielsweise die Ist-Zeitspanne dann und nur dann gemessen wird, wenn der Druck die Druckeigenschaft und/oder der Durchfluss die Durchflusseigenschaft aufweist. Mit anderen Worten ist es vorzugsweise vorgesehen, dass die Ist-Zeitspanne eine solche Zeitspanne ist, während und/oder innerhalb welcher der Druck die Druckeigenschaft und/oder der Durchfluss die Durchflusseigenschaft, insbesondere durchgängig und somit unterbrechungsfrei, aufweist. Dabei ist es, wie zuvor beschrieben, vorzugsweise vorgesehen, dass die Ist-Zeitspanne (Zeitspanne) kürzer als das Gesamtzeitintervall und somit, insbesondere nur, der zuvor genannte Intervallteil des Gesamtzeitintervalls ist, sodass beispielsweise die, insgesamt gesamte, Zeitspanne innerhalb des Gesamtzeitintervalls liegt, insbesondere derart, dass der dritte Zeitpunkt zwischen dem ersten Zeitpunkt und dem vierten Zeitpunkt und somit zwischen dem ersten Zeitpunkt und dem zweiten Zeitpunkt liegt und dass der vierte Zeitpunkt zwischen dem zweiten Zeitpunkt und dem dritten Zeitpunkt und somit zwischen dem ersten Zeitpunkt und dem zweiten Zeitpunkt liegt. Beispielsweise erstreckt sich über das Gesamtzeitintervall ein sogenannter Brühverlauf, welcher durchgeführt wird, um das Kaffeegetränk zuzubereiten. Dabei ist es vorzugsweise vorgesehen, die Zeitspanne (Ist-Zeitspanne) nicht über den gesamten Brühverlauf aufzunehmen und auszuwerten, sondern vorzugsweise ist die Zeitspanne (Ist-Zeitspanne) nur ein Teil des Brühverlaufs, in dessen Teil oder während dessen Teils der Druck die Druckeigenschaft und/oder der Durchfluss die Durchflusseigenschaft, insbesondere jeweils durchgängig und somit unterbrechungsfrei, aufweist. Beispielsweise fällt die Zeitspanne (Ist-Zeitspanne), welche mittels des Zeitmessgeräts gemessen wird, mit einer sogenannten Extraktionsphase zusammen und während dieser Extraktionsphase können anhand des gemessenen Drucks und/oder anhand des gemessenen Durchflusses besonders vorteilhafte Rückschlüsse auf den Mahlgrad des in dem Siebträger aufgenommenen Kaffeepulvers gezogen werden.

Um die Person besonders vorteilhaft beim Auffinden und Einstellen des Mahlgrads unterstützen und somit das Kaffeegetränk besonders vorteilhaft zubereiten zu können, ist es bei einer Ausführungsform der Erfindung vorgesehen, dass, insbesondere während das Wasser mittels der Pumpe gefördert wird, mittels des Durchflusssensors des Getränkebereiters ein zeitlicher Verlauf des Durchflusses gemessen wird, wobei das Signal in Abhängigkeit von dem gemessenen zeitlichen Verlauf des Durchflusses ausgegeben wird. Der zeitliche Verlauf des Durchflusses umfasst mehrere, mittels des Durchflusssensors gemessene Werte des Durchflusses, wobei diese Werte des Durchflusses zu zeitlich aufeinanderfolgenden Zeitpunkten mittels des Durchflusssensors gemessen werden oder wurden.

Eine weitere Ausführungsform zeichnet sich dadurch aus, dass, insbesondere während das Wasser mittels der Pumpe gefördert wird, mittels des Drucksensors des Getränkebereiters ein zeitlicher Verlauf des Drucks gemessen wird, wobei das Signal in Abhängigkeit von dem gemessenen zeitlichen Verlauf des Drucks ausgegeben wird. Hierdurch können besonders vorteilhafte Rückschlüsse auf den Mahlgrad des in dem Siebträger aufgenommenen Kaffeepulvers gezogen werden. Der zeitliche Verlauf des Drucks umfasst mehrere, mittels des Drucksensors gemessene Werte des Drucks, wobei die Werte des Drucks mittels des Drucksensors zu zeitlich aufeinanderfolgenden Zeitpunkten gemessen werden oder wurden.

Um die Person besonders vorteilhaft beim Auffinden des korrekten Mahlgrads unterstützen und somit das Kaffeegetränk besonders vorteilhaft zubereiten zu können, ist es in weiterer Ausgestaltung der Erfindung vorgesehen, dass mittels einer insbesondere elektrischen oder elektronischen Eingabeeinrichtung des Getränkebereiters wenigstens eine durch die Person bewirkte Eingabe erfasst wird. Infolge des Erfassens der Eingabe wird ein spezielles, das heißt insbesondere nur für das Auffinden des korrekten Mahlgrads vorgesehenes Hilfsprogramm des Getränkebereiters gestartet und durchgeführt. Das Hilfsprogramm ist somit speziell dafür vorgesehen, die Person bei einem Einstellen des Mahlgrads, das heißt bei einem Auffinden des korrekten Mahlgrads zu unterstützen. Bei dem Durchführen des Hilfsprogramms wird mittels der Pumpe das Wasser gefördert, insbesondere durch den Siebträger hindurchgefördert, wodurch das Wasser durch den Siebträger, in welchem das Kaffeepulver aufgenommen ist, um aus dem Wasser und dem Kaffeepulver das Kaffeegetränk zuzubereiten. Außerdem wird bei dem Durchführen des Hilfsprogramms mittels der Wiedergabeeinrichtung des Getränkebereiters an die Umgebung des Getränkebereiters das Signal ausgegeben, welches die Information über den Mahlgrad des Kaffeepulvers und/oder über die insbesondere von der Person vorzunehmende Veränderung des Mahlgrads des Kaffeepulvers umfasst.

Grundsätzlich wäre es denkbar, das Signal, insbesondere dann und ganz vorzugsweise immer dann, auszugeben, wenn mittels des Getränkebereiters ein insbesondere normaler Brühverlauf zum Zubereiten des Kaffeegetränks durchgeführt wird. Dies kann jedoch gegebenenfalls von sich in der Umgebung aufhaltenden Personen als störend empfunden werden. Daher ist es vorzugsweise vorgesehen, dass in Abhängigkeit von der Eingabe und somit beispielsweise dann und vorzugsweise nur dann, wenn die Eingabe erfasst wird, das Hilfsprogramm durchgeführt wird, sodass beispielsweise bei normalen Brühvorgängen zum Zubereiten von Kaffeegetränken eine Ausgabe des Signals an die Umgebung unterbleibt und sodass beispielsweise das Signal dann und insbesondere nur dann an die Umgebung ausgegeben wird, wenn das Hilfsprogramm durchgeführt wird. Dadurch kann eine vorteilhafte und bedarfsgerechte Unterstützung der Person beim Einstellen beziehungsweise Auffinden des Mahlgrads realisiert werden, sodass das Kaffeegetränk besonders vorteilhaft zubereitet werden kann.

Eine weitere Ausführungsform zeichnet sich dadurch aus, dass der Durchfluss in Abhängigkeit von dem insbesondere gemessenen Druck gemessen wird. Somit wird beispielsweise der Durchfluss dann und vorzugsweise nur dann gemessen, wenn oder während der Druck wenigstens oder genau ein vorgegebenes Kriterium wie beispielsweise die zuvor genannte Druckeigenschaft erfüllt beziehungsweise aufweist. Dadurch können besonders vorteilhafte Rückschlüsse auf den Mahlgrad gezogen werden.

Eine weitere Ausführungsform zeichnet sich dadurch aus, dass der Druck und/oder der Durchfluss in Abhängigkeit von einem insbesondere gemessenen Zeitintervall gemessen wird, die seit einem Beginn des Verfahrens oder eines bestimmten Intervalls, insbesondere als Teil des Gesamtzeitintervalls, vergangen ist. Hintergrund ist, dass beispielsweise der Druck und der Durchfluss nicht während des gesamten Brühvorgangs, sondern beispielsweise nur während eines insbesondere vorgebbaren oder vorgegebenen Teils des Brühvorgangs gemessen werden, wodurch besonders vorteilhafte Rückschlüsse auf den Mahlgrad gezogen werden können.

Um beispielsweise vorteilhaft auf den Mahlgrad rückschließen und in der Folge die Person besonders vorteilhaft zum Auffinden des korrekten Mahlgrads unterstützen zu können, ist es in weiterer Ausgestaltung der Erfindung vorgesehen, dass der Druck und/oder der Durchfluss innerhalb wenigstens einer ersten Zeitspanne, während und/oder innerhalb welcher das Wasser mittels der Pumpe gefördert wird, gemessen wird, wobei sich an die erste Zeitspanne wenigstens eine zweite Zeitspanne anschließt, während und/oder innerhalb welcher das Wasser mittels der Pumpe gefördert wird, und wobei der ersten Zeitspanne und der zweiten Zeitspanne eine dritte Zeitspanne vorweggeht, während und/oder innerhalb welcher das Wasser mittels der Pumpe gefördert wird, wobei bezogen auf die erste Zeitspanne, die zweite Zeitspanne und die dritte Zeitspanne nur der innerhalb der ersten Zeitspanne gemessene Druck und/oder der nur innerhalb der ersten Zeitspanne gemessene Durchfluss beim Ausgeben des Signals berücksichtigt wird. Beispielsweise ist es vorgesehen, dass während der zweiten Zeitspanne und/oder während der dritten Zeitspanne ein Messen des Drucks und/oder ein Messen des Durchflusses, insbesondere durchgängig, unterbleibt. Somit wird nicht der gesamte Brühvorgang beziehungsweise nicht das gesamte Gesamtzeitintervall berücksichtigt, um den insbesondere aktuellen Mahlgrad des insbesondere aktuell im Siebträger aufgenommenen Kaffeepulvers zu ermitteln beziehungsweise zu beurteilen, sondern der Brühvorgang beziehungsweise das Gesamtzeitintervall wird nur teilweise berücksichtigt, um den Mahlgrad abzuschätzen. Dadurch kann die Person besonders vorteilhaft beim Auffinden des korrekten Mahlgrads unterstützt werden, sodass in der Folge das Kaffeegetränk vorteilhaft zubereitet werden kann.

Als besonders vorteilhaft hat es sich gezeigt, wenn mittels des Zeitmessgeräts des Getränkebereiters die Ist-Zeitspanne in Abhängigkeit von dem insbesondere gemessenen Druck und/oder in Abhängigkeit von dem insbesondere gemessenen Durchfluss gemessen wird. Hierdurch können besonders vorteilhaft Rückschlüsse auf den Mahlgrad gezogen werden.

Ein zweiter Aspekt der Erfindung betrifft einen als Siebträgermaschine ausgebildeten Getränkebereiter, welcher zum Durchführen eines Verfahrens gemäß dem ersten Aspekt der Erfindung ausgebildet ist. Vorteile und vorteilhafte Ausgestaltungen des ersten Aspekts der Erfindung sind als Vorteile und vorteilhafte Ausgestaltungen des zweiten Aspekts der Erfindung anzusehen und umgekehrt.

Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

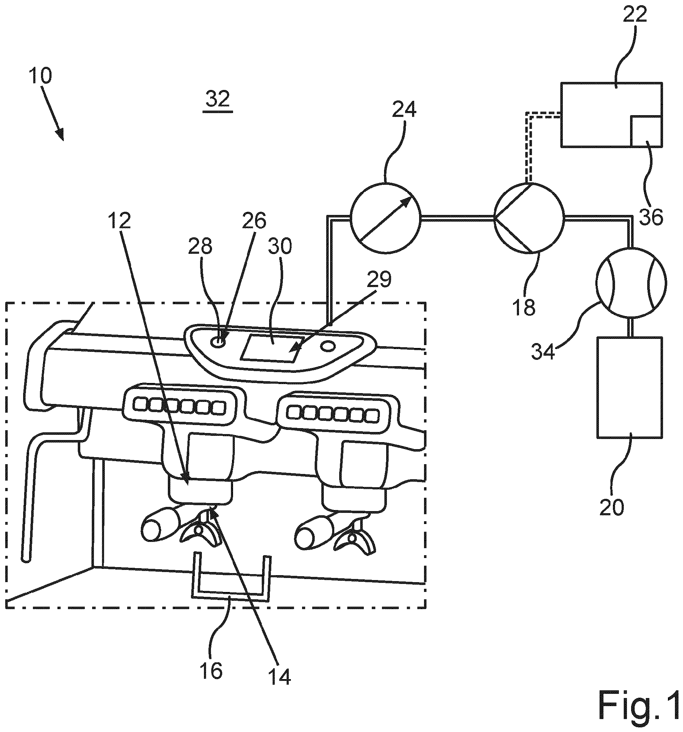

Die Zeichnung zeigt in der einzigen Fig. 1 eine schematische Darstellung eines als Siebträgermaschine ausgebildeten Getränkebereiters zum Zubereiten von Kaffeegetränken.

Die einzige Fig. 1 zeigt in einer schematischen Darstellung einen als Siebträgermaschine ausgebildeten Getränkebereiter 10 zum Zubereiten von, insbesondere als Heißgetränke ausgebildeten, Kaffeegetränken, welche auch einfach als Getränke bezeichnet werden. Somit ist der Getränkebereiter 10 vorzugsweise als ein Heißgetränkebereiter ausgebildet. Bei dem in Fig. 1 gezeigten Ausführungsbeispiel weist der Getränkebereiter 10 einen einfach auch als Kopf bezeichneten Brühkopf 12 auf, an welchem ein separat von dem Brühkopf 12 ausgebildeter Siebträger 14 des Getränkebereiters 10 zerstörungsfrei lösbar befestigt und dadurch gehalten ist. In dem Siebträger 14 ist ein einfach auch als Pulver bezeichnetes Kaffeepulver aufgenommen. Strömt Wasser durch den Siebträger 14 und dabei durch das in dem Siebträger 14 aufgenommene Kaffeepulver hindurch und in der Folge aus dem Siebträger 14 aus, derart, dass das aus dem Siebträger 14 ausströmende Wasser in ein in vertikaler Richtung unterhalb des Siebträgers 14 angeordnetes, beispielsweise als Tasse ausgebildetes Behältnis 16 einströmt, so sammelt sich das aus dem Siebträger 14 ausströmende Wasser in dem Behältnis 16, wobei aus dem Kaffeepulver und aus dem Wasser das jeweilige Kaffeegetränk zubereitet wird, welches sich in dem Behältnis 16 sammelt.

Der Getränkebereiter 10 weist eine Pumpe 18 auf, welche beispielsweise als eine Schwingkolbenpumpe oder als eine andere Pumpe ausgebildet sein kann. Mittels der Pumpe 18 ist das Wasser, insbesondere aus einem auch als Tank bezeichneten Behältnis 20, zu dem Brühkopf 12 hinförderbar und durch den Brühkopf 12 hindurchförderbar. Beispielsweise ist das Behältnis 20, in welchem das Wasser aufnehmbar oder aufgenommen ist, ein Bestandteil des Getränkebereiters 10. Das mittels der Pumpe 18 geförderte und hierdurch den Brühkopf 12 durchströmende Wasser kann von dem Brühkopf 12 zu dem, in den und durch den Siebträger 14 und dabei durch das in dem Siebträger 14 aufgenommene Kaffeepulver strömen.

Im Folgenden wird ein Verfahren zum Betreiben des Getränkebereiters 10 beschrieben. Bei dem Verfahren wird mittels der Pumpe 18 des Getränkebereiters 10 das Wasser, insbesondere aus dem Behältnis 20, gefördert, wodurch das mittels der Pumpe 18 geförderte Wasser durch den Siebträger 14, in welchem das Kaffeepulver aufgenommen ist, hindurchströmt, um aus dem Wasser und dem Kaffeepulver das jeweilige Kaffeegetränk zuzubereiten. Beispielsweise wird durch das mittels der Pumpe 18 bewirkte Fördern des Wassers und somit mittels der Pumpe 18 ein auch als Wasserdruck bezeichneter Druck des mittels der Pumpe 18 geförderten Wassers bewirkt, sodass beispielsweise das Wasser mit dem genannten Wasserdruck durch den Siebträger 14 und dabei durch das darin aufgenommene Kaffeepulver hindurchströmt. Mit anderen Worten wird bei einer Zubereitung des jeweiligen Kaffeegetränks mittels der Pumpe 18 das den Wasserdruck aufweisende Wasser durch den Brühkopf 12 und den Siebträger 14 und das darin aufgenommene Kaffeepulver hindurchgefördert. Außerdem wird durch das mittels der Pumpe 18 bewirkte Fördern des Wassers beispielsweise ein Durchfluss des Wassers bewirkt, sodass beispielsweise das den Durchfluss aufweisende Wasser durch den Siebträger 14 und dabei durch das Kaffeepulver hindurchströmt. Der Durchfluss ist oder umfasst beispielsweise einen Volumenstrom und/oder einen Massenstrom des mittels der Pumpe 18 geförderten Wassers.

Der Getränkebereiter 10 weist eine Wiedergabeeinrichtung 29 auf, mittels welcher bei dem Verfahren an eine Umgebung 32 des Getränkebereiters 10 ein auch als Hinweissignal bezeichnetes Signal ausgegeben wird, welches von einer sich in der Umgebung 32 aufhaltenden Person optisch und/oder akustisch wahrnehmbar ist. Somit ist oder umfasst das Signal beispielsweise ein optisches Hinweissignal, welches von der sich in der Umgebung 32 aufhaltenden Person und somit mittels des menschlichen Auges optisch wahrnehmbar ist. Alternativ oder zusätzlich umfasst das Signal ein von der sich in der Umgebung 32 aufhaltenden Person akustisch und somit mittels des menschlichen Ohrs wahrnehmbares akustisches Hinweissignal. Insbesondere ist die Wiedergabeeinrichtung 29 eine elektronische Wiedergabeeinrichtung, welche beispielsweise von einer elektronischen Recheneinrichtung 22 des Getränkebereiters 10, insbesondere elektrisch, ansteuerbar ist. Durch, insbesondere elektrisches, Ansteuern der Wiedergabeeinrichtung 29 wird das Signal an die Umgebung 32 ausgegeben.

Bei dem in Fig. 1 gezeigten Ausführungsbeispiel umfasst die Wiedergabeeinrichtung 29 einen Bildschirm 30, welcher eine elektrisch ansteuerbare Anzeige ist. Durch das zuvor beschriebene, insbesondere elektrische, Ansteuern der Wiedergabeeinrichtung 29 wird der Bildschirm 30 elektrisch angesteuert, wodurch mittels des Bildschirms 30 zumindest das optische Hinweissignal an die Umgebung 32 ausgegeben wird. Das Signal umfasst wenigstens eine Information über einen Mahlgrad des in dem Siebträger 14 aufgenommenen Kaffeepulvers. Alternativ oder zusätzlich umfasst das Signal eine insbesondere von der Person oder von einer anderen Person vorzunehmende Veränderung des Mahlgrads des in dem Siebträger 14 aufgenommenen Kaffeepulvers. Somit kann die sich in der Umgebung aufhaltende Person durch das Signal über den Mahlgrad des in dem Siebträger 14 aufgenommenen Kaffeepulvers unterrichtet und/oder zu einer Veränderung des Mahlgrads angeregt werden. Unter der Veränderung des Mahlgrads ist zu verstehen, dass die Person eine zum Mahlen von Kaffeebohnen ausgebildete, auch als Mühle bezeichnete Kaffeemühle beeinflusst und hierfür insbesondere manuell bedient, um dadurch den Mahlgrad zu verändern.

Bei dem in Fig. 1 gezeigten Ausführungsbeispiel weist der Getränkebereiter 10 einen Drucksensor 24 auf, mittels welchem der genannte Wasserdruck erfassbar ist. Außerdem weist bei dem in Fig. 1 gezeigten Ausführungsbeispiel der Getränkebereiter 10 einen auch als Flowmeter bezeichneten Durchflusssensor 34 auf, mittels welchem der genannte Durchfluss erfassbar ist. Bei dem Verfahren wird, insbesondere während das Wasser mittels der Pumpe 18 gefördert und dabei insbesondere durch den Siebträger 14 hindurchgefördert wird, der zuvor genannte Wasserdruck des mittels der Pumpe 18 geförderten Wassers mittels des Drucksensors 24 gemessen. Außerdem wird bei dem Verfahren, insbesondere während das Wasser mittels der Pumpe 18 gefördert und dabei insbesondere durch den Siebträger 14 hindurchgefördert wird, mittels des Durchflusssensors 34 der Durchfluss des mittels der Pumpe 18 geförderten Wassers gemessen. Hierfür stellt beispielsweise der Drucksensor 24 ein insbesondere elektrisches erstes Signal bereit, welches auch als Drucksignal bezeichnet wird und den mittels des Drucksensors 24 gemessenen Druck charakterisiert. Außerdem stellt beispielsweise der Durchflusssensor 34 ein insbesondere elektrisches zweites Signal bereit, welches auch als Durchflusssignal bezeichnet wird und den mittels des Durchflusssensors 34 gemessenen Durchfluss charakterisiert. Die elektronische Recheneinrichtung 22 empfängt beispielsweise das Drucksignal und das Durchflusssignal. Außerdem steuert beispielsweise die elektronische Recheneinrichtung 22 die Wiedergabeeinrichtung 29 in Abhängigkeit von dem Durchflusssignal und in Abhängigkeit von dem Drucksignal und somit in Abhängigkeit von dem gemessenen Durchfluss und in Abhängigkeit von dem gemessenen Druck, insbesondere elektrisch, an, sodass durch diese, insbesondere elektrische, Ansteuerung der Wiedergabeeinrichtung 29 die Wiedergabeeinrichtung 29 das Signal an die Umgebung 32 ausgibt.

Aus Fig. 1 ist erkennbar, dass bei dem in Fig. 1 gezeigten Ausführungsbeispiel der Flowmeter (Durchflusssensor 34) in Strömungsrichtung des mittels der Pumpe 18 geförderten Wassers stromauf der Pumpe 18 und somit in einem sogenannten drucklosen Bereich angeordnet ist. Alternativ ist es möglich, dass der Flowmeter in Strömungsrichtung des mittels der Pumpe 18 geförderten Wassers stromab der Pumpe und somit beispielsweise in einem sogenannten Druckbereich angeordnet ist. Der Drucksensor 24 ist in Strömungsrichtung des mittels der Pumpe 18 geförderten Wassers stromab der Pumpe 18 angeordnet.

Alternativ oder zusätzlich kann der Getränkebereiter 10 ein in Fig. 1 besonders schematisch dargestelltes, auch als Uhr bezeichnetes Zeitmessgerät 36 aufweisen. Durch das mittels der Pumpe 18 bewirkte Fördern des Wassers wird beispielsweise mittels der Pumpe 18 eine vorgegebene Menge des Wassers gefördert. Mittels des Zeitmessgeräts 36 wird beispielsweise eine für das mittels der Pumpe 18 bewirkte Fördern der vorgegebenen Menge erforderliche Zeitspanne als eine Ist-Zeitspanne gemessen. Beispielsweise stellt das Zeitmessgerät 36 ein insbesondere elektrisches drittes Signal bereit, welches auch als Zeitsignal bezeichnet wird und die gemessene Ist-Zeitspanne charakterisiert. Die elektronische Recheneinrichtung 22 empfängt beispielsweise das Zeitsignal. Beispielsweise führt die elektronische Recheneinrichtung 22 einen Vergleich durch, bei dem die Ist-Zeitspanne mit einer Soll-Zeitspanne verglichen wird. Die Soll-Zeitspanne ist beispielsweise eine vorgegebene oder vorgebbare Zeitspanne. Beispielsweise ist die Soll-Zeitspanne in einem insbesondere elektrischen oder elektronischen Speicher der elektronischen Recheneinrichtung 22 gespeichert. Beispielsweise steuert die elektronische Recheneinrichtung 22 die Wiedergabeeinrichtung 29 in Abhängigkeit von dem Vergleich an, sodass beispielsweise das Signal in Abhängigkeit von dem Vergleich an die Umgebung 32 ausgegeben wird.

Bei dem Verfahren wird beispielsweise ein auch als Brühvorgang bezeichneter Zubereitungsvorgang durchgeführt, durch welchen das Kaffeegetränk zubereitet wird. Während und/oder innerhalb des Brühvorgangs wird mittels der Pumpe 18 beispielsweise das Wasser insbesondere aus dem Behältnis 20 derart gefördert, dass die Pumpe 18 eine Gesamtmenge des Wassers, insbesondere aus dem Tank 20, fördert. Denkbar ist, dass ein erster Teil der Gesamtmenge nicht durch den Siebträger 14 hindurchströmt und beispielsweise in das Behältnis 20 zurückströmt, wobei beispielsweise ein zweiter Teil der Gesamtmenge durch den Siebträger 14 hindurchströmt, sodass beispielsweise mittels der Pumpe 18 der zweite Teil der Gesamtmenge durch den Siebträger 14 hindurchgefördert wird. Somit werden beispielsweise sowohl der erste Teil als auch der zweite Teil der Gesamtmenge mittels der Pumpe 18 gefördert, jedoch strömt bezogen auf den ersten Teil und den zweiten Teil der Gesamtmenge ausschließlich der zweite Teil der Gesamtmenge durch den Siebträger 14 hindurch, sodass beispielsweise bezogen auf den ersten Teil und den zweiten Teil der Gesamtmenge ausschließlich der zweite Teil mittels der Pumpe 18 durch den Siebträger 14 hindurchgefördert wird. Dabei ist es vorzugsweise vorgesehen, dass die zuvor genannte, vorgegebene Menge des Wassers der zweite Teil der Gesamtmenge ist, insbesondere derart, dass die zuvor genannte, vorgegebene Menge des Wassers bezogen auf den ersten Teil und den zweiten Teil ausschließlich der zweite Teil ist. Beispielsweise ergeben der erste Teil und der zweite Teil in Summe die Gesamtmenge des Wassers.

Ferner ist es denkbar und vorzugsweise vorgesehen, dass ein Zurückströmen eines Teils der Gesamtmenge in das Behältnis 20 unterbleibt, sodass vorzugsweise die gesamte mittels der Pumpe 18 geförderte Gesamtmenge des Wassers durch den Siebträger 14 hindurchströmt, sodass vorzugsweise die gesamte Gesamtmenge die vorgegebene Menge ist.

Ferner ist es vorzugsweise vorgesehen, dass die Ist-Zeitspanne in Abhängigkeit von dem mittels des Drucksensors 24 gemessenen Druck und in Abhängigkeit von dem mittels des Durchflusssensors 34 gemessenen Durchfluss gemessen wird.

Denkbar ist, dass der zuvor genannte Zubereitungsvorgang mehrere Phasen, insbesondere wenigstens oder genau drei Phasen, aufweist, nämlich eine erste Phase, eine zweite Phase und eine dritte Phase. Die Phasen des Zubereitungsvorgangs schließen sich zeitlich, insbesondere direkt, aneinander an, insbesondere derart, dass sich die zweite Phase zeitlich, insbesondere direkt, an die erste Phase und die dritte Phase zeitlich, insbesondere direkt, an die zweite Phase anschließt. Somit beginnt beispielsweise die zweite Phase zu einem Zeitpunkt, zu welchem die erste Phase endet, und beispielsweise beginnt die dritte Phase zu einem Zeitpunkt, zu welchem die zweite Phase endet. Die zweite Phase liegt somit zeitlich zwischen der ersten Phase und der dritten Phase. Der Zubereitungsvorgang beginnt beispielsweise zu einem ersten Zeitpunkt und endet zu einem zweiten Zeitpunkt. Beispielsweise erstreckt sich der Zubereitungsvorgang über ein Gesamtzeitintervall hinweg, welches sich, insbesondere durchgängig, von dem ersten Zeitpunkt zu dem zweiten Zeitpunkt erstreckt und somit zu dem ersten Zeitpunkt beginnt und zu dem zweiten Zeitpunkt endet. Der zuvor genannte Zeitpunkt, zu welchem die erste Phase endet und die zweite Phase beginnt, wird auch als erster Phasenzeitpunkt bezeichnet, und der zuvor genannte Zeitpunkt, zu welchem die zweite Phase endet und die dritte Phase beginnt, wird auch als zweiter Phasenzeitpunkt bezeichnet. Der erste Phasenzeitpunkt liegt zwischen dem ersten Zeitpunkt und dem zweiten Zeitpunkt, und der zweite Phasenzeitpunkt liegt zwischen dem ersten Zeitpunkt und dem zweiten Zeitpunkt, wobei der erste Phasenzeitpunkt zwischen dem ersten Zeitpunkt und dem zweiten Phasenzeitpunkt und der zweite Phasenzeitpunkt zwischen dem ersten Phasenzeitpunkt und dem zweiten Zeitpunkt liegt.

Die erste Phase ist beispielsweise ein sogenanntes Vorbrühen. In der ersten Phase wird mittels der Pumpe 18 das Wasser, insbesondere durchgängig und somit unterbrechungsfrei, gefördert, sodass beispielsweise eine erste Menge des Wassers insbesondere mit einem ersten Wert des Durchflusses gefördert wird. Die zweite Phase ist beispielsweise eine Pause, während welcher ein mittels der Pumpe 18 bewirktes Fördern des Wassers, insbesondere durchgängig und somit unterbrechungsfrei, unterbleibt. Die dritte Phase ist beispielsweise eine sogenannte Extraktion. Die dritte Phase kann, insbesondere wenigstens oder genau, zwei Unterphasen umfassen, nämlich eine erste Unterphase und eine zweite Unterphase. Die erste Unterphase erstreckt sich beispielsweise, insbesondere durchgängig und somit unterbrechungsfrei, von dem zweiten Phasenzeitpunkt bis zu einem dritten Phasenzeitpunkt, und die zweite Unterphase erstreckt sich beispielsweise, insbesondere durchgängig, von dem dritten Phasenzeitpunkt bis zu einem zweiten Zeitpunkt, sodass beispielsweise die erste Unterphase zu dem dritten Phasenzeitpunkt endet, zu welchem die zweite Unterphase beginnt. Die zweite Unterphase endet bei dem zweiten Zeitpunkt, und die erste Unterphase beginnt bei dem zweiten Phasenzeitpunkt. In der ersten Unterphase wird beispielsweise mittels der Pumpe 18 das Wasser insbesondere aus dem Behältnis 20 derart gefördert, dass eine zweite Menge des Wassers mit einem im Wesentlichen konstanten ersten Wert des Drucks gefördert wird. In der zweiten Unterphase wird beispielsweise mittels der Pumpe 18 das Wasser mit einem im Wesentlichen konstanten zweiten Wert des Drucks gefördert. Der erste Wert des Durchflusses wird auch als erster Durchflusswert bezeichnet, der erste Wert des Drucks wird auch als erster Druckwert bezeichnet, und der zweite Wert des Drucks wird auch als zweiter Druckwert bezeichnet. Beispielsweise wird in der zweiten Unterphase mittels der Pumpe 18 eine dritte Menge des Wassers gefördert. Die zweite Menge des Wassers und die dritte Menge des Wassers ergeben beispielsweise in Summe eine Berücksichtigungsmenge des Wassers, sodass die Berücksichtigungsmenge des Wassers in der dritten Phase mittels der Pumpe 18 gefördert und dabei insbesondere durch den Siebträger 14 hindurchgefördert wird. Vorzugsweise ist die Berücksichtigungsmenge die zuvor genannte zweite Menge des Wassers, mithin die vorgegebene Menge des Wassers. Ganz insbesondere ist es vorgesehen, dass bezogen auf die erste Menge des Wassers und die Berücksichtigungsmenge ausschließlich die Berücksichtigungsmenge die vorgegebene Menge des Wassers und somit insbesondere der zweite Teil des Wassers ist, sodass beispielsweise die Ist-Zeitspanne eine Zeitspanne ist, die für das mittels der Pumpe 18 bewirkte Fördern der Berücksichtigungsmenge als die vorgegebene Menge erforderlich ist. Dabei ist es vorzugsweise vorgesehen, dass die Berücksichtigungsmenge kleiner als die erste Menge ist. Ferner ist es denkbar, dass der erste Druckwert größer als der zweite Druckwert ist.

Erkennbar ist auch Folgendes: Die erste Phase und die zweite Phase erstrecke sich über eine erste Zeitspanne, und die dritte Phase erstreckt sich über eine zweite Zeitspanne, wobei die erste Zeitspanne zu dem ersten Zeitpunkt beginnt und zu dem zweiten Phasenzeitpunkt endet, und wobei die zweite Zeitspanne zu dem zweiten Phasenzeitpunkt beginnt und zu dem zweiten Zeitpunkt endet. Innerhalb der ersten Zeitspanne wird das Wasser mittels der Pumpe 18 gefördert, da während der ersten Phase das Wasser mittels der Pumpe 18 gefördert wird. Innerhalb der zweiten Zeitspanne wird das Wasser mit der Pumpe 18 gefördert, da während der dritten Phase das Wasser mit der Pumpe 18 gefördert wird. Erkennbar ist somit, dass der zweiten Zeitspanne die erste Zeitspanne vorweggeht. Bezogen auf die erste Zeitspanne und die zweite Zeitspanne werden nur der innerhalb der zweiten Zeitspanne gemessene Druck und/oder nur der innerhalb der zweiten Zeitspanne gemessene Durchfluss beim Ausgeben oder für das Ausgeben des Signals berücksichtigt. Dabei ist es insbesondere vorgesehen, dass die gemessene Ist-Zeitspanne der zweiten Zeitspanne und somit der dritten Phase entspricht, sodass vorliegend die erste Zeitspanne und somit die erste Phase und die zweite Phase keine Bestandteile der Ist-Zeitspanne sind. Wieder mit anderen Worten ausgedrückt ist es vorzugsweise vorgesehen, dass mittels des Zeitmessgeräts 36 die zweite Zeitspanne als die genannte Ist-Zeitspanne gemessen wird. Somit ist es vorliegend vorgesehen, dass die Ist-Zeitspanne, die mittels des Zeitmessgeräts 36 gemessen wird, eine Zeitspanne ist, während und/oder innerhalb welcher der gemessene Druck und/oder der gemessene Durchfluss eine, insbesondere jeweilige, Eigenschaft, insbesondere durchgängig, aufweisen und somit ein, insbesondere jeweiliges, vorgegebenes Kriterium erfüllen. Erkennbar ist somit auch, dass bezogen auf den gesamten Zubereitungsvorgang ausschließlich die dritte Phase (Extraktion) und somit nur ein Teil des gesamten Zubereitungsvorgangs für das Ausgeben des Signals berücksichtigt wird. Hintergrund ist, dass durch das Berücksichtigen nicht des gesamten Zubereitungsvorgangs, sondern nur der dritten Phase als Teil des gesamten Zubereitungsvorgangs für das Ausgeben des Signals besonders vorteilhaft Rückschlüsse auf den Mahlgrad des in dem Siebträger 14 aufgenommenen Kaffeepulvers rückgeschlossen werden können, sodass in der Folge durch das Ausgeben des Signals die Person besonders präzise über den insbesondere aktuellen Mahlgrad unterrichtet und/oder zu der Veränderung des Mahlgrads angeleitet werden kann.

Bei dem in Fig. 1 gezeigten Ausführungsbeispiel weist der Getränkebereiter 10 eine insbesondere elektrische oder elektronische Eingabeeinrichtung 26 auf, welche wenigstens ein Bedienelement 28 aufweist. Die sich in der Umgebung 32 aufhaltende Person kann, insbesondere mit ihrer Hand, das Bedienelement 28, insbesondere manuell, bedienen und hierdurch eine Eingabe vornehmen. Somit ist die Eingabe mittels des Bedienelements 28 und somit mittels der Eingabeeinrichtung 26 erfassbar. Bei dem Verfahren kann vorgesehen sein, dass in Abhängigkeit von der mittels des Bedienelements 28 erfassten Eingabe der Person ein spezielles Hilfsprogramm des Getränkebereiters 10 gestartet und durchgeführt wird, wobei das Hilfsprogramm speziell dafür vorgesehen ist, die Person bei einem Einstellen des Mahlgrads zu unterstützen.

## Patentansprüche

1. Verfahren zum Betreiben eines als Siebträgermaschine ausgebildeten Getränkebereiters (10) zum Zubereiten von Kaffeegetränken, bei welchem mittels einer Pumpe (18) des Getränkebereiters (10) Wasser gefördert wird, wodurch das Wasser durch einen Siebträger (14), in welchem Kaffeepulver aufgenommen ist, hindurchströmt, um aus dem Wasser und dem Kaffeepulver ein Kaffeegetränk zuzubereiten, wobei mittels einer Wiedergabeeinrichtung (29) des Getränkebereiters (10) an eine Umgebung (32) des Getränkebereiters (10) wenigstens ein von einer sich in der Umgebung (32) des Getränkebereiters (10) aufhaltenden Person optisch und/oder akustisch wahrnehmbares Signal ausgegeben wird, welches wenigstens eine Information über einen Mahlgrad des Kaffeepulvers und/oder über eine Veränderung des Mahlgrads des Kaffeepulvers umfasst, und wobei:
- mittels eines Durchflusssensors (34) des Getränkebereiters (10) ein Durchfluss des mittels der Pumpe (18) geförderten Wassers gemessen wird, wobei das Signal in Abhängigkeit von dem mittels des Durchflusssensors (34) gemessenen Durchflusses ausgegeben wird; und/oder
- mittels eines Drucksensors (24) des Getränkebereiters (10) ein Druck des mittels der Pumpe (18) geförderten Wassers gemessen wird, wobei das Signal in Abhängigkeit von dem mittels des Drucksensors (24) gemessenen Druck ausgegeben wird; und/oder
- mittels der Pumpe (18) eine vorgegebene Menge des Wassers gefördert wird, wobei mittels eines Zeitmessgeräts (36) des Getränkebereiters (10) eine für das mittels der Pumpe (18) bewirkte Fördern der vorgegebenen Menge erforderliche Zeitspanne als eine Ist-Zeitspanne gemessen wird, wobei mittels einer elektronischen Recheneinrichtung (22) des Getränkebereiters (10) die gemessene Ist-Zeitspanne mit einer Soll-Zeitspanne verglichen wird, und wobei das Signal in Abhängigkeit von dem Vergleich der Ist-Zeitspanne mit der Soll-Zeitspanne ausgegeben wird.

2. Verfahren nach Anspruch 1,
**dadurch gekennzeichnet, dass**
mittels des Durchflusssensors (34) des Getränkebereiters (10) ein zeitlicher Verlauf des Durchflusses gemessen wird, wobei das Signal in Abhängigkeit von dem gemessenen zeitlichen Verlauf des Durchflusses ausgegeben wird.

3. Verfahren nach Anspruch 1 oder 2,
**dadurch gekennzeichnet, dass**
mittels des Drucksensors (24) des Getränkebereiters (10) ein zeitlicher Verlauf des Drucks gemessen wird, wobei das Signal in Abhängigkeit von dem gemessenen zeitlichen Verlauf des Drucks ausgegeben wird.

4. Verfahren nach einem der vorhergehenden Ansprüche,
**dadurch gekennzeichnet, dass**
mittels einer Eingabeeinrichtung (26) des Getränkebereiters (10) wenigstens eine durch die Person bewirkte Eingabe erfasst wird, wobei infolge des Erfassens der Eingabe ein spezielles Hilfsprogramm des Getränkebereiters (10) gestartet und durchgeführt wird, dessen Hilfsprogramm speziell dafür vorgesehen ist, die Person bei einem Einstellen des Mahlgrads zu unterstützen, wobei bei dem Durchführen des Hilfsprogramms:
- mittels der Pumpe (18) das Wasser gefördert wird, wodurch das Wasser durch den Siebträger (14), in welchem das Kaffeepulver aufgenommen ist, hindurchströmt, um aus dem Wasser und dem Kaffeepulver das Kaffeegetränk zuzubereiten; und
- mittels der Wiedergabeeinrichtung (29) des Getränkebereiters (10) an die Umgebung (32) des Getränkebereiters (10) das Signal ausgegeben wird, welches die Information über den Mahlgrad des Kaffeepulvers und/oder über die Veränderung des Mahlgrads des Kaffeepulvers umfasst.

5. Verfahren nach einem der vorhergehenden Ansprüche,
**dadurch gekennzeichnet, dass**
der Durchfluss in Abhängigkeit von dem Druck gemessen wird.

6. Verfahren nach einem der vorhergehenden Ansprüche,
**dadurch gekennzeichnet, dass**
der Druck und/oder der Durchfluss in Abhängigkeit von einem Zeitintervall gemessen wird, die seit einem Beginn des Verfahrens vergangen ist.

7. Verfahren nach einem der vorhergehenden Ansprüche,
**dadurch gekennzeichnet, dass**
der Druck und/oder der Durchfluss innerhalb wenigstens einer ersten Zeitspanne, während und/oder innerhalb welcher das Wasser mittels der Pumpe (18) gefördert wird, gemessen wird, wobei:
- sich an die erste Zeitspanne wenigstens eine zweite Zeitspanne anschließt, während und/oder innerhalb welcher das Wasser mittels der Pumpe (18) gefördert wird; und/oder
- der ersten Zeitspanne eine dritte Zeitspanne vorweggeht, während und/oder innerhalb welcher das Wasser mittels der Pumpe (18) gefördert wird.

8. Verfahren nach Anspruch 7,
**dadurch gekennzeichnet, dass**:
- bezogen auf die erste Zeitspanne und die zweite Zeitspanne nur der innerhalb der ersten Zeitspanne gemessene Druck und/oder nur der innerhalb der ersten Zeitspanne gemessene Durchfluss für das Ausgeben des Signals berücksichtigt wird; oder
- bezogen auf die erste Zeitspanne und die dritte Zeitspanne nur der innerhalb der ersten oder dritten Zeitspanne gemessene Druck und/oder nur der innerhalb der ersten oder dritten Zeitspanne gemessene Durchfluss für das Ausgeben des Signals berücksichtigt wird; oder
- bezogen auf der erste Zeitspanne und die zweite Zeitspanne und die dritte Zeitspanne nur der innerhalb der ersten oder dritten Zeitspanne gemessene Druck und/oder nur der innerhalb der ersten oder dritten Zeitspanne gemessene Durchfluss für das Ausgeben des Signals berücksichtigt wird.

9. Getränkebereiter (10), welcher als eine Siebträgermaschine und zum Durchführen eines Verfahrens nach einem der vorhergehenden Ansprüche ausgebildet ist.
